# FASCICULE DE BREVET EUROPEEN

(11) **EP 2 347 064 B1**
(45) Date de publication et mention de la délivrance du brevet: **04.06.2014**
(21) Numéro de dépôt: 09748294.7
(22) Date de dépôt: 26.10.2009
(51) Int. Cl.: B32B 27/22, E04F 15/02, B32B 27/30, A47G 27/04

(54) **REVETEMENT DE SURFACE AMOVIBLE**
ABNEHMBARE OBERFLÄCHENVERKLEIDUNG
REMOVABLE SURFACE COVERING

(30) Priorité: 28.10.2008 EP 08167686
(43) Date de publication de la demande: 27.07.2011
(73) Titulaire: Tarkett GDL S.A., 9779 Lentzweiler (LU)
(72) Inventeur: SCHAUER, Etienne, B-6700 Freylange (BE); PERES, Richard, B-6600 Bastogne (BE)
(74) Mandataire: Pronovem
(86) Numéro de dépôt international: PCT/EP2009/064077
(87) Numéro de publication internationale: WO 2010/049387

(56) Documents cités:
- FR-A- 2 362 257
- US-A1- 2006 048 464
- US-A1- 2006 156 663

## Description

### Objet de l'invention

La présente invention se rapporte aux revêtements de surface amovibles, en particulier de revêtements de sol amovibles, et propose une solution aux problèmes liés à la pose de tels revêtements.

### Etat de la technique

Pour la décoration intérieure ou extérieure d'un bâtiment ou d'une habitation, on utilise généralement des revêtements de surface, en particulier des revêtements de sol, car ils s'avèrent être plus agréables, plus esthétiques, et plus confortables qu'une surface nue ou simplement peinte. Généralement, il s'agit de revêtements de sol en matière synthétique, en bois ou textile. Habituellement, il s'agit de revêtements de sol multicouches en matière synthétique qui comprennent d'une part une couche inférieure, dite couche de support, et d'autre part une couche supérieure, dite couche d'usure, qui présente une bonne résistance aux agressions mécaniques et chimiques qui surviennent dans les conditions normales d'utilisation de tels revêtements.

Généralement, la pose d'un revêtement de sol nécessite l'emploi d'une colle forte que l'on étale préalablement sur la surface que l'on veut recouvrir. Cela permet d'obtenir une bonne stabilité du revêtement sur la surface. Or lorsqu'il s'agit de remplacer le revêtement de sol, il est très difficile de le décoller, et généralement, il subsiste de nombreuses traces de colle et/ou de revêtement qu'il faut éliminer soit par un décapage physique (par grattage) soit par un décapage chimique. La surface doit ensuite être à nouveau lissée et nettoyée afin de pouvoir poser un nouveau revêtement. Généralement, cette technique de pose ne permet pas d'enlever, de replacer ou de changer, le revêtement de sol, ou certains éléments du revêtement, sans l'endommager ou le détériorer, ce qui a pour conséquence de le rendre inutilisable.

Afin d'offrir un revêtement de sol amovible, il a été proposé de ne pas coller définitivement le revêtement sur la surface à recouvrir, mais d'employer des bandes de rubans adhésifs double-faces, ou d'employer un fixateur universel. Or, ces solutions sont assez fastidieuses et déconseillées lorsque deux ou plusieurs lés seront posés, car l'étanchéité n'est pas parfaite au niveau des joints. De plus, comme pour une colle classique, les adhésifs double-faces ou le fixateur universel présentent l'inconvénient de se détériorer avec le temps sous l'effet de l'humidité et des nettoyages répétés du revêtement.

Pour éviter l'emploi d'adhésif ou de colle, une solution alternative, connue sous le terme « parquet flottant », consiste à utiliser des dalles ou des lattes, généralement en bois, fixées entre-elles par un dispositif de fixation mécanique, de clip ou de colle. Ce type de revêtement présente une bonne résistance au trafic dans le temps et laisse la surface qu'il recouvre exempt de colle. Néanmoins, un parquet flottant, une fois posé, présente l'inconvénient d'être alors d'un seul tenant, et ainsi, de ne pas permettre le remplacement d'un ou plusieurs des éléments qui le compose.

Pour répondre à la problématique de la pose d'un revêtement amovible réutilisable, et dont la pose n'endommage pas la surface qu'il recouvre, les documents US 3341996 et FR 2350445 proposent l'emploi de particules magnétisées. Le document FR 2350445 propose l'application d'un mastic magnétisable sur la surface à décorer ou sur la surface d'un revêtement, et d'appliquer sur la surface qui va entrer en contact avec la surface à décorer, ou la surface du revêtement, un liant chargé en poudre de fer. Le document US 3341996 décrit quant à lui un revêtement de sol comprenant une sous-couche qui comprend des charges magnétiques sur laquelle vient se positionner une couche décoratrice comprenant également des charges magnétiques. Néanmoins, un des problèmes rencontrés pour ce type de revêtement réside dans le manque de stabilité des dalles entre elles dans tous les plans directionnels. Lors d'un fort passage, les dalles, les lattes ou les lés du revêtement, bougent les uns par rapport aux autres.

Dans le document US 7194843, il a été proposé l'emploi d'une sous-couche dont la face supérieure comprend des crochets, de type « hameçons » et d'un revêtement décoratif dont la face inférieur comprend de petites boucles en plastique. Quand les deux faces sont pressées l'une contre l'autre, les crochets agrippent les boucles et maintiennent les deux couches en contact à la manière de bandes auto-agrippantes de type Velcro™. Plus la pression exercée est forte, plus les crochets agrippent les boucles ; de ce fait, la résilience de ce type de revêtement représente un inconvénient majeur car des éléments lourds, des meubles par exemple, laissent des traces d'écrasement marquées et indélébiles. Par ailleurs, la force à exercer pour enlever la partie décorative du revêtement est souvent si importante que sa dépose entraîne bien souvent le soulèvement ou le décollement de la sous-couche. En outre, après de fréquentes poses et déposes de la partie décorative, les crochets et/ou les boucles s'allongent ou se cassent, réduisant ainsi la qualité d'attache dans le temps.

Le document FR 2362257 décrit un produit pour revêtir un sol comportant une couche d'usure fixée de manière amovible à une sous-couche d'ancrage, qui peut être par exemple en polychlorure de vinyle. La liaison amovible peut être réalisée au moyen de bandes collantes reliées respectivement à la couche d'usure et à la sous-couche ou de nappes souples dont les surfaces complémentaires portent respectivement des crochets et des boucles destinés à s'interpénétrer.

De surcroit, toutes les solutions décrites précédemment présentent l'inconvénient d'être non seulement très onéreuses à produire, mais aussi l'inconvénient de nécessiter un procédé de fabrication spécifique.

### Buts de l'invention

La présente invention propose une solution pour la décoration de surface, en particulier de sol, qui ne présente pas les inconvénients de l'état de la technique.

Elle vise à fournir un revêtement de surface amovible peu onéreux et d'une mise en oeuvre aisée.

Elle vise en particulier à fournir un revêtement de surface dont la partie décorative est amovible et peut être modifiée à volonté sans causer de dommages ou altérer la partie décorative et/ou la surface recouverte de la partie décorative.

Elle vise en outre à fournir un revêtement de surface dont la partie décorative, tout en étant amovible, présente une stabilité dimensionnelle.

### Résumé de l'invention

La présente invention décrit un kit de décoration de sol comprenant deux éléments, d'une part un revêtement de surface amovible, et d'autre part une sous-couche d'ancrage, la composition de ladite sous-couche d'ancrage étant à base de PVC et comprenant au moins 60% en poids d'un plastifiant.

Selon des formes particulières de réalisation, le revêtement de surface selon l'invention comporte l'une ou une combinaison quelconque d'une ou plusieurs des caractéristiques suivantes :
- la sous-couche d'ancrage est à poser sur le sol à recouvrir, le revêtement de surface amovible venant se poser sur ladite sous-couche d'ancrage,
- le plastifiant est choisi parmi le groupe formé par les phtalates, les adipates, les trimellitates, les organophosphates, les citrates, les huiles végétales et les esters de polyols dérivés de l'amidon, ou leur mélange,
- le plastifiant est choisi parmi le groupe formé par le di-isobutylphthalate, le di-isoheptylphthalate, le di-isononylphthalate, ou leur mélange,
- la sous-couche d'ancrage comprend des charges renforçantes et/ou un voile de verre,
- la sous-couche d'ancrage a une épaisseur d'au moins 0,25 mm,
- le revêtement de surface amovible est à base de résine polymérique, de caoutchouc, de bois, de textile, de verre, de métal ou de céramique,
- le revêtement de surface amovible est à base de PVC ou à base de fibres de bois de moyenne densité (MDF) ou à base de fibres de bois à haute densité (HDF),
- le revêtement de surface amovible est un produit multicouche en résine polymérique comprenant une couche de support qui est moussée, compacte ou textile, et comprenant une couche d'usure,
- le revêtement de surface amovible comprend en outre une couche barrière disposée entre la couche de support et la couche d'usure,
- le revêtement de surface amovible comprend en outre un verni de protection à base de polyuréthane réticulable par UV,
- le revêtement de surface amovible comprend sur la surface entrant en contact avec la sous-couche d'ancrage un enduit tackifiant à base de PVC comprenant au moins 60% en poids d'un plastifiant.

La présente invention décrit également un procédé de fixation d'un revêtement de surface décoratif amovible, comprenant l'utilisation d'une sous-couche d'ancrage, ladite sous-couche étant posée sur le sol à recouvrir, et ayant une composition à base de PVC comprenant au moins 60% en poids d'un plastifiant.

Selon des formes particulières de réalisation, le procédé selon l'invention comporte l'une ou une combinaison quelconque d'une ou de plusieurs des caractéristiques suivantes :
- la sous-couche d'ancrage est posée sur le sol avant de poser le revêtement de surface décoratif amovible sur ladite sous-couche d'ancrage,
- la sous-couche d'ancrage recouvre de façon continue le sol à recouvrir,
- le revêtement de surface décoratif amovible comprend, sur la surface qui va entrer en contact avec la sous-couche d'ancrage, un enduit tackifiant à base de PVC comprenant au moins 60% en poids d'un plastifiant.

### Brève description des figures

La figure 1 est une représentation schématique du kit de recouvrement de sol.
La figure 2 est une représentation schématique du kit de recouvrement de sol dans lequel le revêtement de surface amovible est un produit multicouche.
La figure 3 représente une coupe transversale d'un revêtement de surface amovible selon une première forme de réalisation de l'invention.
La figure 4 représente une coupe transversale d'un revêtement de surface amovible selon une deuxième forme de réalisation de l'invention.
La figure 5 représente une coupe transversale d'une sous-couche d'ancrage sur un papier anti-adhérent.
La figure 6 représente une coupe transversale d'une sous-couche d'ancrage comprenant un voile de verre.
La figure 7 représente une coupe transversale d'une sous-couche d'ancrage comprenant une couche compacte à base de PVC.
La figure 8 représente une coupe transversale d'une autre forme de réalisation d'une sous-couche d'ancrage comprenant une couche compacte.

### Description détaillée de l'invention

Un revêtement de surface, en particulier un revêtement de sol, présente des propriétés mécaniques particulières, notamment en termes de résistance mécanique, de dureté et de résistance à l'usure, mais également en termes de confort, de souplesse et d'isolation phonique et thermique.

Le kit de décoration 1 de sol selon l'invention combine les avantages d'un revêtement de sol classique avec l'avantage de pouvoir être interchangeable et réutilisable.

Le kit de décoration 1 comprend deux éléments distincts, à savoir un revêtement de surface amovible 2 et une sous-couche d'ancrage 3. La sous-couche d'ancrage est une composition à base de PVC fortement plastifié. Elle présente un effet collant, encore appelé effet tackifiant. Elle peut avoir une consistance molle, plus ou moins gélatineuse. De préférence, la sous-couche d'ancrage 3 comprend au moins 60% en poids d'un plastifiant.

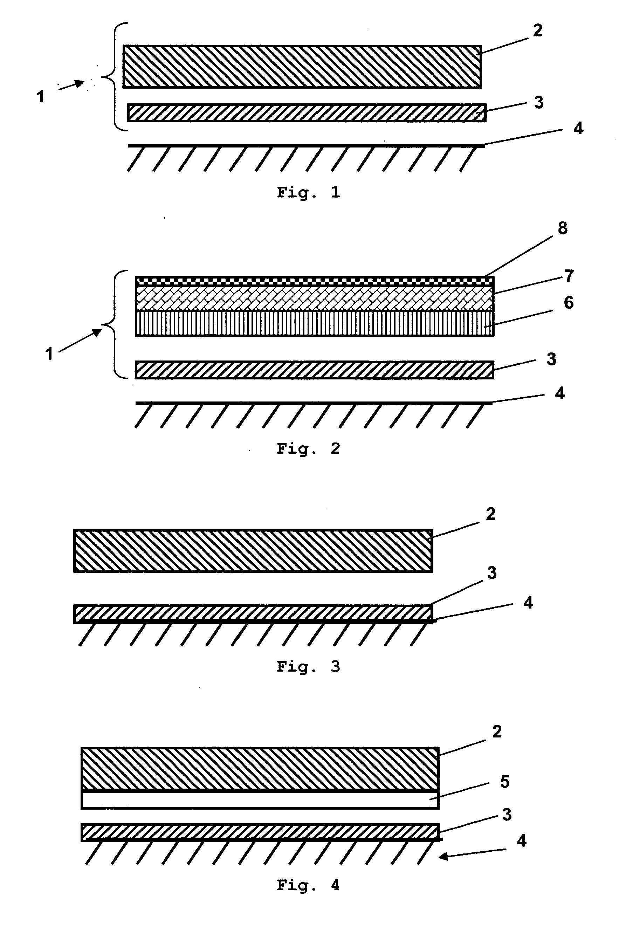

Dans une première forme de réalisation de l'invention (figures 1 à 3), la sous-couche d'ancrage 3 est posée sur le sol 4 avant que le revêtement de surface décoratif amovible 2 ne soit posé sur ladite sous-couche d'ancrage 3.

Dans une seconde forme de réalisation de l'invention (figures 4), la sous-couche d'ancrage 3 est posée sur le sol 4, et vient au contact d'un enduit tackifiant 5 recouvrant la surface inférieur (ou envers) du revêtement de surface décoratif amovible 2.

Dans toutes les formes de réalisation de l'invention, le revêtement de surface décoratif amovible 2 est maintenu en place par l'effet collant de la sous-couche d'ancrage 3 fortement plastifié.

La sous-couche d'ancrage 3 posée sur le sol à recouvrir peut y être fixée de façon permanente, par tout moyen adéquat, ou de façon non-permanente par l'effet collant de ladite sous-couche d'ancrage 3. La sous-couche d'ancrage 3 est posée sur le sol à recouvrir de façon continue ou discontinue.

La sous-couche d'ancrage 3 est une composition à base de PVC fortement plastifié. Elle comprend au moins 60% en poids, de préférence au moins 66% en poids, d'un plastifiant, ou d'un mélange de plastifiants.

De préférence, le plastifiant est choisi parmi la famille des phtalates, des adipates, des trimellitates, des organophosphates des citrates, des huiles végétales et des esters de polyols naturels dérivant de l'amidon, par exemple le diester d'isosorbide.

De préférence, le plastifiant est du DIBP (Di-isobutylphthalate), de DIHP (Di-isoheptylphthalate) ou de DINP (Di-isononylphthalate) ou un mélange de ces composés. Il peut également s'agir d'huile de soja époxydée ou d'huile de ricin.

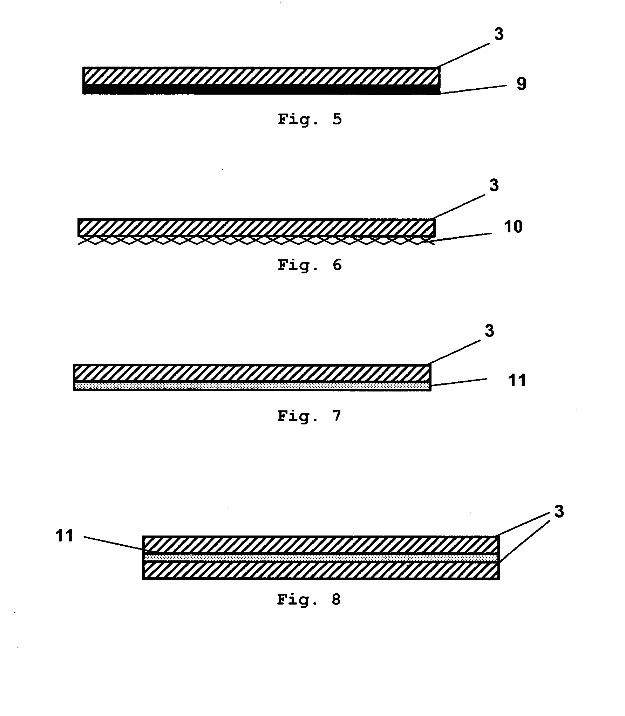

De façon générale, la sous-couche d'ancrage 3 est une composition à base de PVC comprenant au moins 60% en poids d'un plastifiant. Néanmoins, elle peut également présenter une certaine rigidité structurelle, qui peut être obtenue par l'emploi de charges, en particulier de charges renforçantes comme par exemple du carbonate de calcium, du caolin ou du talc, ou par l'emploi d'un voile de verre 10 (figure 6) ou d'une couche compacte 11 à base de PVC (figure 7). Dans ces cas de figure, la composition à base de PVC fortement plastifiée est appliquée soit sur une seule face, soit sur les deux faces, du voile de verre 10 ou de la couche compacte 11 (figure 8). Dans une forme de réalisation particulière, la sous-couche d'ancrage comprend une couche compacte 11 à base de PVC sur laquelle un voile de verre est appliqué, sur lequel la composition à base de PVC fortement plastifiée est appliquée.

L'enduit tackifiant 5 est tout enduit adéquat. De préférence, il s'agit d'une composition à base de PVC fortement plastifié qui comprend au moins 60% en poids d'un plastifiant ou d'un mélange de plastifiants. De préférence, le plastifiant est du DIBP (Di-isobutylphthalate), de DIHP (Di-isoheptylphthalate) ou de DINP (Di-isononylphthalate) ou un mélange de ces composés. Il peut également s'agir d'huile de soja époxydée ou d'huile de ricin.

L'enduit tackifiant 5 peut être appliqué de façon continue ou discontinue sur le revêtement de surface décoratif amovible 2 de toutes les manières adéquates. De préférence, l'enduit tackifiant 5 est préalablement déposé sur un support adéquat, ou bien directement sur le revêtement de surface amovible 2 par enduction, sous une forme liquide, puis gélifié par action de la chaleur, par exemple par le passage dans un four entre 150 et 200°C, avantageusement à 180°C, pendant environ deux minutes. Pour un revêtement de surface amovible 2 en panneau à base de fibres de bois, l'enduit tackifiant 5 est déposé sur un papier anti-adhérent (papier release), puis il est ensuite appliqué sur le revêtement de surface amovible 2 à l'aide de tout adhésif adéquat, par exemple un adhésif acrylique ou hotmelt à base d'EVA.

De préférence, l'enduit tackifiant 5 forme une couche d'au moins 0,25 mm d'épaisseur, avantageusement entre 0,25 et 0,5 mm.

Dans toutes les formes de réalisation de l'invention, le revêtement de surface amovible 2 selon l'invention est tout élément de revêtement de surface adéquat, de forme, de couleur, et de toute matière adéquate.

Le revêtement de surface amovible 2 peut être à base de résine polymérique, de caoutchouc, de bois, de textile, de verre, de métal ou de céramique. Il peut s'agir, par exemple, de laminés, des panneaux de particules de bois haute densité (HDF) ou des panneaux de particules de bois moyenne densité (MDF) comprenant un papier mélaminé de décor (impression bois ou autres) et un papier de contreparement. Il peut s'agir également d'un revêtement de surface de type linoléum. Dans un autre exemple, il peut s'agir d'un produit multicouche en résine polymérique comprenant une couche de support 5 qui est moussée, compacte ou textile, et une couche d'usure 6 en résine polymérique, qui peut être éventuellement recouverte d'une couche d'un verni de protection 8 (figure 2), ledit vernis 8 pouvant être à base de polyuréthane réticulable par rayons ultra-violet (UV).

En particulier, le revêtement de surface amovible 2 est un produit multicouche à base de PVC comprenant une couche de support 6 et/ou la couche d'usure 7 à base de PVC, et un verni de protection 8 à base de polyuréthane. Avantageusement, la couche de support 6 et/ou la couche d'usure 7 du revêtement de surface amovible 2 comprend un voile de verre ou des charges, de préférence des charges minérales, destinées à lui conférer des propriétés mécaniques particulières. Les charges minérales peuvent être, par exemple, du carbonate de calcium, du caolin ou du talc.

Le revêtement de surface amovible 2 peut comprendre en outre une couche barrière empêchant, ou réduisant, la remonté des plastifiants de la sous-couche d'ancrage 3 vers la partie supérieure du revêtement de surface amovible 2. De préférence, ladite couche barrière est disposée entre la couche de support 6 et la couche d'usure 7. De préférence, la couche barrière est un film à base de polyester.

Dans une forme de réalisation préférée de l'invention, le kit de décoration 1 comprend une sous-couche d'ancrage 3 et un revêtement de surface amovible 2 qui est un produit multicouche à base de PVC recouvert d'un verni de protection 8, et d'un enduit tackifiant 5 recouvrant de façon continue la surface du revêtement amovible 2 qui va entrer en contact avec la sous-couche d'ancrage 3.

Dans le cas d'un revêtement de surface amovible 2 ayant la forme d'une latte ou d'une dalle, il est apparu que la rigidité de la sous-couche 3 augmente la stabilité dimensionnelle des dalles, ou des lattes, les unes par rapport aux autres. L'emploi de la sous-couche 3 a un effet autobloquant sur le revêtement de surface amovible 2. Ainsi, soumises à des contraintes de traction, les dalles ou lattes présentent une meilleure stabilité horizontale, empêchant l'apparition d'espaces entre les revêtements de surface amovible 2, rendant ainsi l'ensemble du revêtement plus résistant et stable au trafic sans devoir recourir à l'emploi d'un joint entre les dalles ou les lattes.

L'adhérence du revêtement de surface amovible 2, éventuellement recouvert d'un enduit tackifiant 5, a été évaluée (tableau 1) grâce à un test qui consiste à déterminer la force à appliquer sur le revêtement de surface 2 pour qu'il se détache d'un support fixe, ou de la sous-couche d'ancrage 3 qui est fixée de façon permanente sur le support fixe.

L'influence de la présence de l'enduit tackifiant 5 sur la dureté du revêtement a également été évaluée (tableau 1) par des mesures d'indentation, ou poinçonnement, effectuées selon la norme EN433. Un poids de 50 kg est appliqué sur un poinçon de 1 cm². Après 150 minutes sous charge et 150 minutes au repos on mesure la profondeur de l'emprunte laissée par le poinçon.

**Tableau 1 :**

| | Partie supérieure /sous-couche | % de plastifiant | Température de gélification (°C) | Epaisseur du gel (mm) | Indentation (mm) | Force (N) |
|---|---|---|---|---|---|---|
| 1 | sans gel /avec gel | 60 | 155 | 0 /0,5 | 0,03 | 0,49 |
| 2 | avec gel /avec gel | 66 | 180 | 0,25 /0,25 | 0,09 | 41,20 |
| 3 | avec gel /sans gel | 60 | 155 | 0,5 / 0 | 0 | 19,62 |
| 4 | avec gel /sans gel | 66 | 180 | 0,25 / 0 | 0,04 | 20,40 |

De façon surprenante, en comparant les combinaisons 1 et 3 du tableau 1, il apparaît que l'enduit tackifiant 5 appliqué sur le revêtement de surface 2 (combinaison 3) permet une meilleure adhérence dudit revêtement amovible 2 au sol, par rapport à la situation dans laquelle une sous-couche d'ancrage 3 est appliquée sur le sol (combinaison 1). De plus, en comparant les combinaisons 2 et 4, il apparaît que la situation la plus avantageuse est un revêtement de surface comprenant l'enduit tackifiant 5 en combinaison avec une sous-couche d'ancrage 3.

Durant les tests d'adhérence, il est également apparut que l'adhérence augmente en fonction de la pression qui est appliquée sur le revêtement de surface amovible 2 pour qu'il adhère à la sous-couche d'ancrage 3 préalablement posé sur le sol. Plus la pression est forte, meilleure est l'adhérence. Ainsi, s'agissant d'un revêtement de sol, plus le trafic sur la partie amovible 2 est important, plus ladite partie amovible 2 adhère à la sous-couche d'ancrage 3 qui a été préalablement posé sur le sol.

Outre le fait que la solution pour la décoration de surface selon l'invention présente l'avantage de permettre une pose facile, sans l'emploi de colle, d'un ou plusieurs éléments d'un revêtement de surface, il présente également l'avantage de laisser une grande liberté dans le choix du décor et de permettre la combinaison de différents revêtements décoratifs amovibles de différente nature (résine polymérique, bois, caoutchouc, métal, céramique) et de permettre un remplacement facile d'un ou plusieurs éléments de la partie amovible 2 tout en préservant le pouvoir collant de la sous-couche d'ancrage 3.

L'emploi de la sous-couche d'ancrage 3, recouvrant préalablement le sol à décorer, présente l'avantage supplémentaire d'offrir une surface plane même si la surface à recouvrir présente des aspérités.

De plus, le revêtement de surface amovible 2 et/ou la sous-couche d'ancrage 3 sont régénérables et réutilisables indéfiniment, car la sous-couche d'ancrage 3, une fois lavée, retrouve sa propriété autocollante ou tackifiante.

La couche d'ancrage 3 présente également l'avantage de réduire la transmission sonore entre la surface externe du revêtement de surface et la surface à recouvrir.

### Exemples :

### Exemple 1 :

Le revêtement de surface amovible est un panneau à base de fibres de bois à haute densité HDF (Smart original de Tarkett) de 7 mm d'épaisseur comprenant un enduit tackifiant de 0,5 mm d'épaisseur comprenant 17,6% de PVC P1353K Vestolit^{®}, 15,4% de charges (CaCO₃ Durcal^{®} 15 de chez OMYA) 62% de DINP Jayflex^{®} d'Exxon et 0,37% d'un agent rhéologique (Aerosil^{®} 200 d'EVONIK). L'enduit tackifiant est déposée sur le revêtement amovible à l'aide d'un Adhesif TESA^{®} 4970 et d'un papier anti-adhésif (papier release Stipkote EHR.C1.S.EX flat de SAPPI Europe) enduit avec la composition à base de PVC fortement plastifié qui a été gélifié par un passage dans un four à 180 °C.

**Exemple 2 :**

Le revêtement de surface amovible est un produit multicouche de PVC de 2,5 mm d'épaisseur comprenant un enduit tackifiant de 0,5 mm d'épaisseur, comprenant 17,6% de PVC P1353K Vestolit^{®}, 15,4% de charges (CACO₃ Durcal^{®} 15 de chez OMYA) 62% de DINP Jayflex^{®} d'Exxon et 0,37% d'un agent rhéologique (Aerosil^{®} 200 d'EVONIK). L'enduit tackifiant est déposé sur le revêtement amovible sous forme liquide puis gélifié par un passage dans un four à 155°C. Le revêtement amovible multicouche à base de PVC (Tarkett Stone 370) comprend une mousse d'envers, une sous-couche calandrée de 600 g/m² à base de PVC recyclé comprenant une couche de saturation de voile de verre de 80 g/m², une couche de mousse belle face, un vernis à base de polyuréthane de 10 micromètres.

### Exemple 3 :

Le revêtement de surface amovible est celui décrit dans l'exemple 2. Le sol est recouvert d'une sous-couche d'ancrage comprenant un voile de verre enduit sur ces deux faces d'une composition comprenant comprenant 17,6% de PVC P1353K Vestolit^{®}, 15,4% de charges (CaCO₃ Durcal^{®} 15 de chez OMYA) 62% de DINP Jayflex^{®} d'Exxon et 0,37% d'un agent rhéologique (Aerosil^{®} 200 d'EVONIK), puis la composition est gélifiée par un passage dans un four à 155°C. Le revêtement de surface amovible se positionne sur la sous-couche d'encrage qui a été préalablement posée sur le sol.

### Exemple 4 :

L'exemple 4 est identique à l'exemple 3, à l'exception de la gélification de la sous-couche d'ancrage recouvrant le sol, et la gélification de l'enduit tackifiant, qui s'effectue par un passage dans un four à 180 °C.

### Exemple 5 :

L'exemple 5 est identique à l'exemple 4, à l'exception de la sous-couche d'ancrage à poser sur le sol qui comprend 13,5% de PVC P1353K Vestolit^{®}, 4,4% de Lacovyl^{®} PA 1384 d'Arkema, 15,4% de charges (CaCO3 Durcal^{®} 15 de chez OMYA) 66% de DINP Jayflex^{®} d'Exxon et 0,7% d'un agent rhéologique (Aerosil^{®} 200 d'EVONIK).

### Exemple 6 :

L'exemple 6 est identique à l'exemple 5, à l'exception de la sous-couche d'ancrage dont l'épaisseur est de 0,25 mm.

### Exemple 7 :

Le revêtement de surface amovible est le revêtement selon l'exemple 2. Le sol est recouvert d'une sous-couche d'ancrage comprenant une couche compact en PVC, comprenant 12,4% de Jayflex^{®} DINP d'Exxon, 12,9% de PVC Vinnolit^{®} P 4472, 16,1% de Vestolite^{®} B 7021, 47% de CaCO₃ OMYA BL 20, 11,6% de Benzoate de Nonyle. La couche compact PVC est recouverte, sur la face qui entre en contact avec le revêtement de surface amovible, d'une composition comprenant comprenant 17,6% de PVC P1353K de Vestolit^{®}, 15,4% de charges (CaCO₃ Durcal^{®} 15 de chez OMYA) 62% de DINP Jayflex^{®} d'Exxon et 0,37% d'un agent rhéologique Aerosil^{®} 200 d'EVONIK, déposé sous forme liquide, puis gélifié par un passage dans un four à 155°C.

### Exemple 8 :

Le revêtement de surface amovible est un panneau à base de fibres de bois à haute densité HDF (Smart original de Tarkett) de 7 mm d'épaisseur, sans enduit tackifiant, et se positionne sur la sous-couche d'ancrage préalablement posée sur le sol, ladite sous-couche d'ancrage comprenant 13,5% de PVC P1353K Vestolit^{®}, 4,4% de Lacovyl^{®} PA 1384 d'Arkema, 15,4% de charges (CaCO3 Durcal^{®} 15 de chez OMYA) 66% de DINP Jayflex^{®} d'Exxon et 0,7% d'un agent rhéologique (Aerosil^{®} 200 d'EVONIK).

### Exemple 9 :

Le revêtement de surface amovible est un produit multicouche de PVC de 2,5 mm d'épaisseur, sans enduit tackifiant, et se positionne sur la sous-couche d'ancrage préalablement posée sur le sol, ladite sous-couche d'ancrage comprenant 13,5% de PVC P1353K Vestolit^{®}, 4,4% de Lacovyl^{®} PA 1384 d'Arkema, 15,4% de charges (CaCO3 Ducal^{®} 15 de chez OMYA) 66% de DINP Jayflex^{®} d'Exxon et 0,7% d'un agent rhéologique (Aerosil^{®} 200 d'EVONIK).

### Légende :

1 : Kit de décoration
2 : revêtement de surface amovible
3 : sous-couche d'ancrage
4 : sol
5 : enduit tackifiant
6 : couche support
7 : couche d'usure
8 : verni de protection
9 : papier anti-adhérent.

## Revendications

1. Kit de décoration (1) de sol comprenant deux éléments, d'une part un revêtement de surface amovible (2), et d'autre part une sous-couche d'ancrage (3), la composition de ladite sous-couche d'ancrage (3) étant à base de PVC et comprenant au moins 60% en poids d'un plastifiant.

2. Kit de décoration (1) selon la revendication 1, dans lequel la sous-couche d'ancrage (3) est à poser sur le sol à recouvrir, le revêtement de surface amovible (2) venant se poser sur ladite sous-couche d'ancrage.

3. Kit de décoration (1) selon la revendication 1 ou 2, dans lequel le plastifiant est choisi parmi le groupe formé par les phtalates, les adipates, les trimellitates, les organophosphates, les citrates, les huiles végétales et les esters de polyols dérivés de l'amidon, ou leur mélange.

4. Kit de décoration (1) selon l'une quelconque des revendications précédentes, dans lequel le plastifiant est choisi parmi le groupe formé par le di-isobutylphthalate, le di-isoheptylphthalate, le di-isononylphthalate, ou leur mélange.

5. Kit de décoration (1) selon l'une quelconque des revendications précédentes, dans lequel la sous-couche d'ancrage (3) comprend des charges et/ou un voile de verre.

6. Kit de décoration (1) selon l'une quelconque des revendications précédentes, dans lequel la sous-couche d'ancrage (3) a une épaisseur d'au moins 0,25 mm.

7. Kit de décoration (1) selon l'une quelconque des revendications précédentes, dans lequel le revêtement de surface amovible (2) est à base de résine polymérique, de caoutchouc, de bois, de textile, de verre, de métal ou de céramique.

8. Kit de décoration (1) selon la revendication 6, dans lequel le revêtement de surface amovible (2) est à base de PVC ou à base de fibres de bois de moyenne densité (MDF) ou à base de fibres de bois à haute densité (HDF).

9. Kit de décoration (1) selon l'une quelconque des revendications précédentes, dans lequel le revêtement de surface amovible (2) est un produit multicouche en résine polymérique comprenant une couche de support (6) qui est moussée, compacte ou textile, et comprenant une couche d'usure (7).

10. Kit de décoration (1) selon la revendication 9, dans lequel le revêtement de surface amovible comprend en outre une couche barrière disposée entre la couche de support (6) et la couche d'usure (7).

11. Kit de décoration (1) selon l'une quelconque des revendications précédentes, dans lequel le revêtement de surface amovible (2) comprend en outre un verni (8) de protection à base de polyuréthane réticulable par rayons Ultra-violet.

12. Kit de décoration (1) selon l'une quelconque des revendications précédentes, dans lequel le revêtement de surface amovible (2) comprend sur la surface entrant en contact avec la sous-couche d'ancrage (3) un enduit tackifiant (5) à base de PVC comprenant au moins 60% en poids d'un plastifiant.

13. Procédé de fixation d'un revêtement de surface décoratif amovible (2), comprenant l'utilisation d'une sous-couche d'ancrage (3), ladite sous-couche (3) étant posée sur le sol à recouvrir, et ayant une composition à base de PVC comprenant au moins 60% en poids d'un plastifiant.

14. Procédé selon la revendication 13, dans laquelle la sous-couche d'ancrage (3) est posée sur le sol avant de poser le revêtement de surface décoratif amovible (2) sur ladite sous-couche d'ancrage (3).

15. Procédé selon l'une quelconque des revendications 13 ou 14, dans laquelle la sous-couche d'ancrage (3) recouvre de façon continue le sol à recouvrir.

16. Procédé selon l'une quelconque des revendications précédentes, dans laquelle le revêtement de surface décoratif amovible (2) comprend, sur la surface qui va entrer en contact avec la sous-couche d'ancrage (3), un enduit tackifiant (5) à base de PVC comprenant au moins 60% en poids d'un plastifiant.

## Patentansprüche

1. Bodendekorationsbausatz (1), der zwei Elemente enthält, einerseits einen entfernbaren Flächenbelag (2) und andererseits eine Verankerungs-Unterschicht (3), wobei die Zusammensetzung der Verankerungs-Unterschicht (3) auf PVC basiert und mindestens 60 Gew.-% eines Weichmachers enthält.

2. Dekorationsbausatz (1) nach Anspruch 1, wobei die Verankerungs-Unterschicht (3) auf dem zu bedeckenden Boden zu verlegen ist, während der entfernbare Flächenbelag (2) auf der Verankerungs-Unterschicht verlegt wird.

3. Dekorationsbausatz (1) nach Anspruch 1 oder 2, wobei der Weichmacher aus der Gruppe ausgewählt wird, die von den Phthalaten, den Adipaten, den Trimellitaten, den Organophosphaten, den Citraten, den pflanzlichen Ölen und den von Stärke derivatisierten Polyolestern, oder ihren Mischungen gebildet wird.

4. Dekorationsbausatz (1) nach einem der vorhergehenden Ansprüche, wobei der Weichmacher aus der Gruppe ausgewählt wird, die von Diisobutylphthalat, Di-isoheptylphthalat, Diisononylphthalat oder ihrer Mischung gebildet wird.

5. Dekorationsbausatz (1) nach einem der vorhergehenden Ansprüche, wobei die Verankerungs-Unterschicht (3) Füllstoffe und/oder ein Glasvlies enthält.

6. Dekorationsbausatz (1) nach einem der vorhergehenden Ansprüche, wobei die Verankerungs-Unterschicht (3) eine Dicke von mindestens 0,25 mm hat.

7. Dekorationsbausatz (1) nach einem der vorhergehenden Ansprüche, wobei der entfernbare Flächenbelag (2) auf der Basis von Polymerharz, Kautschuk, Holz, Textil, Glas, Metall oder Keramik ist.

8. Dekorationsbausatz (1) nach Anspruch 6, wobei der entfernbare Flächenbelag (2) auf der Basis von PVC oder auf der Basis von Holzfasern mittlerer Dichte (MDF) oder auf der Basis von Holzfasern hoher Dichte (HDF) ist.

9. Dekorationsbausatz (1) nach einem der vorhergehenden Ansprüche, wobei der entfernbare Flächenbelag (2) ein Mehrschichtprodukt aus Polymerharz ist, das eine Trägerschicht (6) enthält, die geschäumt, kompakt oder textil ist, und eine Verschleissschicht (7) enthält.

10. Dekorationsbausatz (1) nach Anspruch 9, wobei der entfernbare Flächenbelag außerdem eine Sperrschicht enthält, die zwischen der Trägerschicht (6) und der Verschleissschicht (7) angeordnet ist.

11. Dekorationsbausatz (1) nach einem der vorhergehenden Ansprüche, wobei der entfernbare Flächenbelag (2) außerdem einen Schutzlack (8) auf der Basis von durch Ultraviolettstrahlen vernetzbarem Polyurethan enthält.

12. Dekorationsbausatz (1) nach einem der vorhergehenden Ansprüche, wobei der entfernbare Flächenbelag (2) auf der mit der Verankerungs-Unterschicht (3) in Kontakt kommenden Fläche eine klebrigmachende Beschichtung (5) auf der Basis von PVC enthält, die mindestens 60 Gew.-% eines Weichmachers enthält.

13. Verfahren zur Fixierung eines entfernbaren dekorativen Flächenbelags (2), das die Verwendung einer Verankerungs-Unterschicht (3) enthält, wobei die Unterschicht (3) auf dem zu bedeckenden Boden verlegt wird und eine Zusammensetzung auf der Basis von PVC hat, die mindestens 60 Gew.-% eines Weichmachers enthält.

14. Verfahren nach Anspruch 13, wobei die Verankerungs-Unterschicht (3) auf dem Boden verlegt wird, ehe der entfernbare dekorative Flächenbelag (2) auf der Verankerungs-Unterschicht (3) verlegt wird.

15. Verfahren nach einem der Ansprüche 13 oder 14, wobei die Verankerungs-Unterschicht (3) den zu bedeckenden Boden durchgehend bedeckt.

16. Verfahren nach einem der vorhergehenden Ansprüche, wobei der entfernbare dekorative Flächenbelag (2) auf der Fläche, die mit der Verankerungs-Unterschicht (3) in Kontakt kommen wird, eine klebrigmachende Beschichtung (5) auf der Basis von PVC enthält, die mindestens 60 Gew.-% eines Weichmachers enthält.

## Claims

1. Floor decorating kit (1) comprising two components, on the one hand a removable surface covering (2) and, on the other hand, an anchoring underlayer (3), the composition of the said anchoring underlayer (3) being based on PVC and comprising at least 60% by weight of a plasticizer.

2. Decorating kit (1) according to Claim 1, in which the anchoring underlayer (3) is to be positioned on the floor to be covered, the removable surface covering (2) coming to be positioned on the said anchoring underlayer.

3. Decorating kit (1) according to Claim 1 or 2, in which the plasticizer is chosen from the group formed by phthalates, adipates, trimellitates, organophosphates, citrates, vegetable oils and esters of polyols derived from starch, or their mixture.

4. Decorating kit (1) according to any one of the preceding claims, in which the plasticizer is chosen from the group formed by di(isobutyl) phthalate, di(isoheptyl) phthalate, di(isononyl) phthalate, or their mixture.

5. Decorating kit (1) according to any one of the preceding claims, in which the anchoring underlayer (3) comprises fillers and/or a glass mat.

6. Decorating kit (1) according to any one of the preceding claims, in which the anchoring underlayer (3) has a thickness of at least 0.25 mm.

7. Decorating kit (1) according to any one of the preceding claims, in which the removable surface covering (2) is based on polymer resin, rubber, wood, textile, glass, metal or ceramic.

8. Decorating kit (1) according to Claim 6, in which the removable surface covering (2) is based on PVC or based on medium-density wood fibres (MDFs) or based on high-density wood fibres (HDFs).

9. Decorating kit (1) according to any one of the preceding claims, in which the removable surface covering (2) is a multilayer product made of polymer resin comprising a support layer (6) which is expanded, compact or textile and comprising a wear layer (7).

10. Decorating kit (1) according to Claim 9, in which the removable surface covering additionally comprises a barrier layer positioned between the support layer (6) and the wear layer (7).

11. Decorating kit (1) according to any one of the preceding claims, in which the removable surface covering (2) additionally comprises a polyurethane-based protective varnish (8) crosslinkable by ultraviolet radiation.

12. Decorating kit (1) according to any one of the preceding claims, in which the removable surface covering (2) comprises, on the surface coming into contact with the anchoring underlayer (3), a PVC-based tackifying coating (5) comprising at least 60% by weight of a plasticizer.

13. Method for attaching a removable decorative surface covering (2), comprising the use of an anchoring underlayer (3), the said underlayer (3) being positioned on the floor to be covered and having a PVC-based composition comprising at least 60% by weight of a plasticizer.

14. Method according to Claim 13, in which the anchoring underlayer (3) is positioned on the floor before positioning the removable decorative surface covering (2) on the said anchoring underlayer (3).

15. Method according to either one of Claims 13 and 14, in which the anchoring underlayer (3) uninterruptedly covers the floor to be covered.

16. Method according to any one of the preceding claims, in which the removable decorative surface covering (2) comprises, on the surface which will come into contact with the anchoring underlayer (3), a PVC-based tackifying coating (5) comprising at least 60% by weight of a plasticizer.
